Europäisches Patentamt

European Patent Office

Office européen des brevets

(11) Veröffentlichungsnummer: **0 407 375 A2**

## EUROPÄISCHE PATENTANMELDUNG

(21) Anmeldenummer: 90890204.2

(22) Anmeldetag: 05.07.90

(51) Int. Cl.5: **B23D 71/02**

(30) Priorität: **05.07.89 AT 1638/89**

(43) Veröffentlichungstag der Anmeldung:
**09.01.91 Patentblatt 91/02**

(84) Benannte Vertragsstaaten:
**DE FR GB IT**

(71) Anmelder: **GARANTURBO MASCHINEN UND,
WERKZEUGE GESELLSCHAFT M.B.H.
Floridusgasse 50
A-1210 Wien(AT)**

(72) Erfinder: **Haas Adolf
Obere Donaustrasse 101/2/6
A-1020 Wien(AT)**

(74) Vertreter: **Haffner, Thomas M., Dr. et al
Patentanwaltskanzlei Dipl.-Ing. Adolf
Kretschmer Dr. Thomas M. Haffner
Schottengasse 3a
A-1014 Wien(AT)**

(54) Distanzstück für ein im wesentlichen zylindrisches Werkzeug sowie Verfahren zu seiner Herstellung.

(57) Bei einem Distanzstück (1) für ein im wesentlichen zylindrisches Werkzeug, an dessen Umfang bogenstückförmige Klingen unter Zwischenschaltung der Distanzstücke (1) mittels sich in axialer Richtung durch die Distanzstücke hindurch erstreckender Bolzen festgelegt sind, wobei die Distanzstücke (1) aus Stahlblech bestehen und aus der Ebene abgebogene Lappen (5) aufweisen, sind die den Abstand benachbarter Klingen bestimmenden Lappen (5) als an der Innenkante der Außenkante (3) des Distanzstückes (1) angeordnete und in Umfangsrichtung des Werkzeuges und des Distanzstückes (1) orientierte Lappen ausgebildet, wobei in Umfangsrichtung nebeneinander liegende Lappen (5) unter Freilassen eines Abstandes voneinander angeordnet sind, um eine einfache Anpassung an unterschiedliche Abstände benachbarter Klingen bei gleichzeitiger Verbesserung der thermischen Ableitung zu ermöglichen.

FIG. 1

# DISTANZSTÜCK FÜR EIN IM WESENTLICHEN ZYLINDRISCHES WERKZEUG SOWIE VERFAHREN ZU SEINER HERSTELLUNG

Die Erfindung bezieht sich auf ein Distanzstück für ein im wesentlichen zylindrisches Werkzeug, an dessen Umfang bogenstückförmige Klingen unter Zwischenschaltung der Distanzstücke mittels sich in axialer Richtung durch die Distanzstücke hindurch erstreckender Bolzen festgelegt sind, wobei die Distanzstücke aus Stahlblech bestehen und aus der Ebene abgebogene, den Abstand benachbarter Klingen bestimmende Lappen aufweisen, sowie auf ein Verfahren zur Herstellung eines derartigen Distanzstückes, wobei an einem Blechzuschnitt entsprechend der gewünschten Höhe der Lappen Stanzungen vorgenommen werden und Lappen aus der Ebene des Blechzuschnittes, vorzugsweise um einen Winkel von 90° abgebogen werden, und wobei Durchbrechungen für Verbindungsbolzen ausgestanzt werden.

Bei Distanzstücken gemäß dem Stand der Technik, insbesondere bei Distanzstücken gemäß der AT-PS 327 711 oder der AT-PS 361 790 wurde in erster Linie darauf abgezielt, die Luftzirkulation zwischen in Achsrichtung benachbart angeordneten bogenstückförmigen Werkzeugen zu verbessern. Vor allem die Ausbildung nach der AT-PS 361 790 zielte hiebei gleichzeitig darauf ab, das Gewicht des Distanzstückes zu reduzieren, wobei durch die Ausbildung gemäß dieser AT-PS 361 790 im wesentlichen radiale Kanäle ausgebildet wurden, durch welche Luft zirkulieren kann. Nachteilig bei dieser bekannten Ausbildung gemäß der AT-PS 361 790 ist die Tatsache, daß die Durchbrechungen, aus welchen die sich in radialer Richtung erstreckenden Lappen ausgebogen werden, den freien Platz für die Anordnung von Durchbrechungen zur Aufnahme der Befestigungsbolzen für die Klingen beschränken und daß daher mit Rücksicht auf die erforderliche Stabilität des Distanzstückes das Werkzeug nicht nachträglich an unterschiedliche Klingen mit unterschiedlichem Lochabstand für die Aufnahme der Verbindungsbolzen angepaßt werden kann. Für unterschiedliche Klingen ist neben einem in weiten Grenzen frei wählbaren Lochabstand für die Aufnahme der Befestigungsbolzen häufig auch eine unterschiedliche Distanz für benachbarte Klingen einzuhalten und bei den aus der AT-PS 361 790 bekanntgewordenen Distanzstücken mußte in einem solchen Fall das gesamte Herstellungswerkzeug, insbesondere das Stanzwerkzeug sowie das Biegewerkzeug abgeändert werden um Distanzstücke mit unterschiedlicher Höhe und damit unterschiedlichen Abständen zwischen benachbarten Klingen herstellen zu können. Für die Herstellung derartiger Distanzstücke war somit ein wesentlich größerer Aufwand erforderlich, wenn unterschiedliche Höhen und unterschiedliche Lochabstände für die Festlegung der Klingen erzielt werden sollen. Weiters hat sich gezeigt, daß durch Erhöhung der Luftzirkulation eine ausreichende Kühlung der am stärksten thermisch beanspruchten Bereiche der Klingen nicht ohne weiteres gewährleistet werden kann. Die in das Material, beispielsweise einen für die Runderneuerung vorzubereitenden Reifen, eintauchenden Klingen werden an ihrer Schneidkante am stärksten thermisch belastet und die Lebensdauer derartiger Klingen läßt sich dann wirkungsvoll verlängern, wenn die an dieser Stelle entstehende Hitze möglichst nahe der Schneidkante abgeleitet werden kann.

Die Erfindung zielt nun darauf ab, ein Distanzstück der eingangs genannten Art zu schaffen, welches unter geringstem gerätetechnischen Aufwand auf unterschiedliche Abstände benachbarter Klingen oder unterschiedliche Lochabstände für die Aufnahme von Verbindungsbolzen abgeändert werden kann und welches gleichzeitig eine verbesserte thermische Ableitung nahe den Schneidkanten der Klingen ergibt. Weiters zielt die Erfindung darauf ab, auch bei unterschiedlichen Lochabständen für die Verbindungsbolzen zur Festlegung der Klingen ein hohes Maß an Stabilität ohne Gefahr des Entstehens von Vibrationen zu gewährleisten. Zur Lösung dieser Aufgabe besteht die erfindungsgemäße Ausbildung im wesentlichen darin, daß die Lappen als an der Innenkante und der Außenkante des Distanzstückes angeordnete und in Umfangsrichtung des Werkzeuges und des Distanzstückes orientierte Lappen ausgebildet sind, wobei in Umfangsrichtung nebeneinander liegende Lappen unter Freilassen eines Abstandes voneinander angeordnet sind. Dadurch, daß an der Peripherie des Distanzstückes an der Innenkante und der Außenkante Lappen abgebogen werden, deren freie Kanten nach dem Abbiegen im wesentlichen in Umfangsrichtung verlaufen, wird eine Ausbildung geschaffen, bei welcher der die Löcher für das Durchstecken von Befestigungsbolzen aufweisende Mitteilteil von weiteren Durchbrechungen als derartigen Aufnahmelöchern freigehalten wird, so daß eine größere Freiheit für das Anpassen an Klingen mit unterschiedlichem Lochabstand für die Befestigungsbolzen geschaffen wird. Gleichzeitig erlauben diese in Umfangsrichtung verlaufenden abgebogenen Lappen eine deutlich verbesserte Ableitung der Hitze nahe den Schneidkanten, da die Werkzeuge an den in Umfangsrichtung verlaufenden freien Enden der abgebogenen Lappen in berührendem Kontakt angeschlossen sind und die Ableitung der Hitze über thermische Leitung erfolgen kann. Die thermische Leitfähigkeit von Metall ist wesentlich größer als von Luft und auch zirkulierende Luft vermag gegenüber einem derartigen unmittelbaren Kontakt metallischer Flächen aneinander keine bessere Wärmeableitung zu vermitteln. Durch die in Umfangsrichtung verlaufenden abgebogenen Lappen wird darüber hinaus die Möglichkeit geschaffen, durch in radialer Richtung unterschiedlich tiefe Ausschnitte ohne Änderung des Biegewerkzeuges unterschiedliche Distanzstücke herzustellen, welche verschiedene Abstände benachbarter Klingen ermöglichen. Im Betrieb hat sich darüber hinaus gezeigt, daß derartige rotierende zylindrische Werkzeuge, insbesondere beim Einsatz für die Vorbereitung zum Runderneuern von Reifen, nicht notwendigerweise lediglich mit ihren Klingen in das Material eintauchen. Bei Ausbildungen von Distanzstükken mit im wesentlichen radial verlaufenden Stegen wurde hiebei vereinzelt beobachtet, daß auch diese radial verlaufenden Stege in das Material eintauchen und derartige radial verlaufende Stege sind daher überaus bruchgefährdet.

In vorteilhafter Weise ist die erfindungsgemäße Ausbildung so getroffen, daß die Summe der freien Kantenlängen der abgebogenen Lappen wenigstens einem Drittel, vorzugsweise wenigstens der Hälfte der in Umfangsrichtung gemessenen Kantenlänge des Distanzstückes entspricht. Auf diese Weise wird eine effiziente Temperaturableitung in unmittelbarer Nachbarschaft der Klingenaußenkante sichergestellt.

Eine besonders hohe Stabilität des im übrigen überaus leicht ausgebildeten Distanzstückes läßt sich dadurch erreichen, daß die Enden des Distanzstückes in der Draufsicht in Umfangsrichtung sich konisch verjüngend ausgebildet sind und daß im Bereich der sich konisch verjüngenden Enden abgebogene Lappen angeschlossen sind.

Um neben der unmittelbaren Ableitung der thermischen Energie durch Kontakt bzw. Berührung mit den Stirnkanten der abgebogenen Lappen zusätzlich eine Kühlung zu schaffen und die Gefahr zu verringern, daß es im Bereich des Distanzstückes zu einer unzulässig hohen Anhäufung von abgeschnittenem Material kommt ist die Ausbildung mit Vorteil so getroffen, daß in radialer Richtung hintereinander liegende Lappen zumindest teilweise versetzt angeordnet sind.

Um auch bei geringen Abständen bzw. größerer Zahl der für die Verbindungsbolzen erforderlichen Durchbrechungen eine hohe Stabilität ohne Gefahr eines Auftretens von Vibrationen im Betrieb sicherzustellen, ist die Ausbildung mit Vorteil so getroffen, daß die Ränder der Durchbrechungen für die Aufnahme von Verbindungsbolzen zur Ausbildung einer Hülse verformt sind. Die Verformung der Ränder kann hiebei durch Stauchen, Tiefziehen oder Börteln erfolgen und eine derartige Ausbildung führt gleichzeitig zu einer Erhöhung der Standzeit des Werkzeuges, da Kerbbeanspruchungen der Verbindungsbolzen im Bereich der Durchbrechungen des Distanzstückes vermieden werden.

Das erfindungsgemäße Verfahren zur Herstellung eines derartigen Distanzstückes, wobei an einem Blechzuschnitt entsprechend der gewünschten Höhe der Lappen Stanzungen vorgenommen werden und Lappen aus der Ebene des Blechzuschnittes, vorzugsweise um einen Winkel von 90° abgebogen werden, und wobei Durchbrechungen für Verbindungsbolzen ausgestanzt werden, ist im wesentlichen dadurch gekennzeichnet, daß aus den in Umfangsrichtung verlaufenden Kanten des Blechzuschnittes radiale viereckige Ausnehmungen ausgestanzt werden, deren Tiefe in radialer Richtung entsprechend der gewünschten Höhe der Lappen gewählt ist und daß die neben den Ausnehmungen verbleibenden Lappen abgebogen werden, worauf gegebenenfalls nach dem Ausstanzen die Ränder der Durchbrechungen für die Verbindungsbolzen kalt verformt, insbesondere tiefgezogen werden. Ein derartiges Verfahren hat gegenüber der Herstellung bekannter Distanzelemente den Vorteil, daß durch einfache Verstellung des Stanzwerkzeuges ohne wesentliche Modifikation des Biegewerkzeuges unterschiedlich hohe Distanzstücke hergestellt werden können. Eine Abänderung der Höhe des Distanzstückes hat hiebei keinen Einfluß auf die verbleibende freie Fläche für die Anordnung von Durchbrechungen von sich in axialer Richtung erstreckenden Befestigungsbolzen, wie sie für den Zusammenbau des im wesentlichen zylindrischen Werkzeuges mit den bogenstückförmigen Klingen erforderlich sind. Prinzipiell kann eine unterschiedliche Höhe des Distanzstückes dadurch erzielt werden, daß einmal alle Lappen zur gleichen Seite des Blechzuschnittes abgebogen werden und zur Vergrößerung der Höhe derartige Lappen abwechselnd zu beiden Seiten des Grundkörpers herausgebogen werden. Ein Abbiegen zu beiden Seiten des Grundkörpers läßt sich mit dem gleichen Biegewerkzeug ohne weiteres bewerkstelligen, wenn hiefür der Blechzuschnitt abwechselnd in unterschiedlicher Lage in das Biegewerkzeug eingelegt wird. Zur Erzielung einer besonders hohen Stabilität kann das Verfahren so durchgeführt werden, daß alle Lappen zur gleichen Seite des Blechzuschnittes abgebogen werden. Um die zur Erhöhung der Stabilität vorteilhafte Ausbildung der Ränder der Durchbrechungen für die Verbindungsbolzen zu erzielen, wird dabei so vorgegangen, daß die Ränder der Durchbrechungen für die Verbindungsbolzen nach dem Ausstanzen kalt verformt, insbesondere tiefgezogen werden. Die auf diese Weise erzielte hülsenartige Ausbildung der Lochränder verringert gleichzeitig die Kerbbelastung der Verbindungsbolzen im Betrieb und trägt damit zur Erhöhung der Standzeit des Werkzeuges bei.

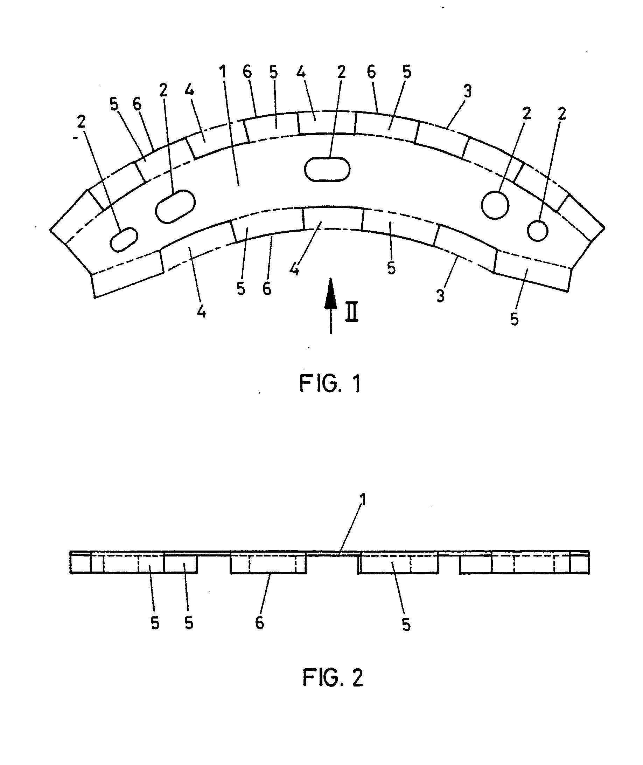

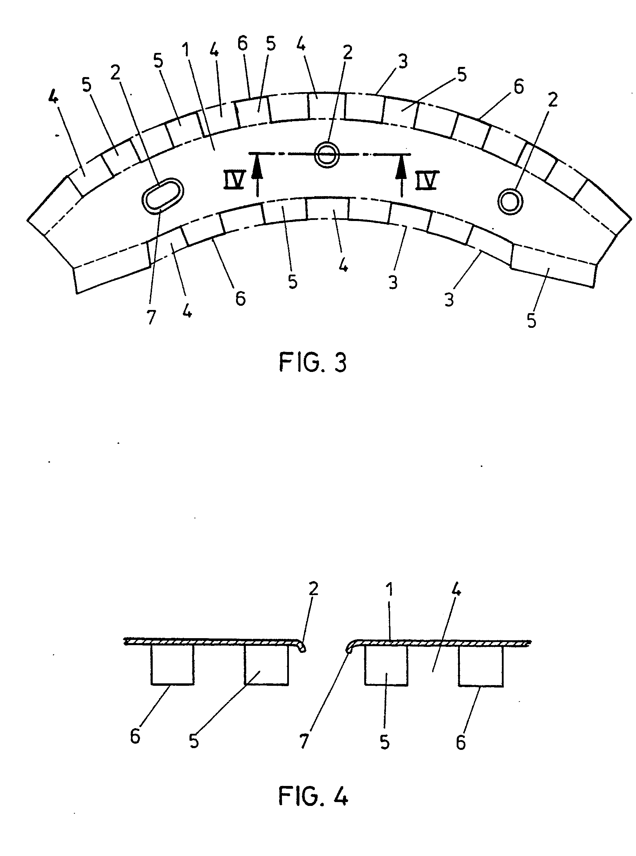

Die Erfindung wird nachfolgend an Hand eines in der Zeichnung schematisch dargestellten Ausführungsbeispieles näher erläutert. In dieser zeigen Fig.1 eine Draufsicht auf einen Blechzuschnitt zur Herstellung eines erfindungsgemäßen Distanzstükkes; Fig.2 eine Ansicht in Richtung des Pfeiles II auf ein Distanzstück nach dem Abbiegen der Lappen; Fig. 3 in einer Draufsicht eine abgewandelte Ausführungsform eines Blechzuschnittes eines erfindungsgemäßen Distanzstückes und Fig.4 einen teilweisen Schnitt nach der Linie IV-IV der Fig.3 auf das Distanzstück nach dem Abbiegen der Lappen.

In Fig.1 ist der Grundkörper eines Distanzstükkes mit 1 bezeichnet. An diesem Grundkörper können in unterschiedlichen Abständen Durchbrechungen 2 für die Aufnahme von Verbindungsbolzen für die Festlegung von im wesentlichen bodenstückförmigen Klingen vorgesehen sein, welche in der Zeichnung nicht dargestellt sind.

An den Umfangskanten eines derartigen Blechzuschnittes, welche mit 3 strichliert angedeutet sind, werden im wesentlichen radiale Einschnitte bzw. Ausschnitte 4 angebracht, wodurch Lappen 5 zwischen den Ausschnitten verbleiben. Durch Abbiegen dieser Lappen 5 aus der Ebene des Blechzuschnittes 1 wird eine im wesentlichen in Umfangsrichtung verlaufende freie Kante 6 an diesen Lappen 5 ausgebildet, welche beim Zusammenbau des Werkzeuges mit den Klingen unter Anspannen der durch die Durchbrechungen 2 hindurchgeführten, nicht dargestellten, Bolzen in stirnseitige Berührung mit benachbarten Werkzeugen gelangen. Über diese freien Kanten 6 erfolgt nach dem Zusammenbau eine Ableitung der entstehenden Wärme, wie sie bei einem Schneidvorgang mit bogenstückförmigen Klingen auftritt.

Die mit benachbarten bogenstückförmigen Klingen kontaktierenden Kanten sind bei der Darstellung nach Fig.2 deutlich ersichtlich und wiederum mit 6 bezeichnet. Wie aus der Darstellung nach Fig.2 ersichtlich ist, sind in radialer Richtung hintereinander liegende Lappen zumindest teilweise versetzt angeordnet.

Wie insbesondere aus Fig.1 ersichtlich, sind die freien Enden des Blechzuschnittes 1 so ausgebildet, daß sie sich an ihrer Peripherie verjüngen. Nach dem Abbiegen der endständigen Lappen 5 wird hiebei bei gleichzeitig gering bleibendem Gewicht eine bedeutende Erhöhung der Stabilität erzielt. Dies ist insbesondere mit Rücksicht auf die hochfeste Verspannung benachbarter Klingen miteinander im Bereich der endständigen Durchbrechungen 2 besonders vorteilhaft.

Bei der Ausbildung gemäß Fig.3 und 4 sind die Bezugszeichen der Fig.1 und 2 beibehalten worden. Dabei sind zur Verbesserung der Stabilität des Distanzstückes im Betrieb die Ränder 7 der Durchbrechungen 2 für die Aufnahme von Verbindungsbolzen für die Festlegung von im wesentlichen bogenförmigen Klingen zur Ausbildung einer Hülse verformt, wie dies insbesondere aus Fig.4 deutlich ersichtlich ist. Die Verformung der Ränder 7 kann dabei durch Tiefziehen, Stauchen oder Börteln erfolgen. Neben einer Erhöhung der Stabilität des gesamten Blechzuschnittes bewirken die hülsenförmigen Durchbrechungen 2 auch eine Schonung der Verbindungsbolzen durch eine weitgehende Vermeidung von Kerbbeanspruchungen.

## Ansprüche

1. Distanzstück für ein im wesentlichen zylindrisches Werkzeug, an dessen Umfang bogenstückförmige Klingen unter Zwischenschaltung der Distanzstücke (1) mittels sich in axialer Richtung durch die Distanzstücke (1) hindurch erstreckender Bolzen festgelegt sind, wobei die Distanzstücke (1) aus Stahlblech bestehen und aus der Ebene abgebogene, den Abstand benachbarter Klingen bestimmende Lappen (5) aufweisen, dadurch gekennzeichnet, daß die Lappen (5) als an der Innenkante und der Außenkante (3) des Distanzstückes (1) angeordnete und in Umfangsrichtung des Werkzeuges und des Distanzstückes (1) orientierte Lappen (5) ausgebildet sind, wobei in Umfangsrichtung nebeneinander liegende Lappen (5) unter Freilassen eines Abstandes voneinander angeordnet sind.

2. Distanzstück nach Anspruch 1, dadurch gekennzeichnet, daß die Summe der freien Kantenlängen der abgebogenen Lappen (5) wenigstens einem Drittel, vorzugsweise wenigstens der Hälfte der in Umfangsrichtung gemessenen Kantenlänge des Distanzstückes (1) entspricht.

3. Distanzstück nach Anspruch 1 oder 2, dadurch gekennzeichnet, daß die Enden des Distanzstückes (1) in der Draufsicht in Umfangsrichtung sich konisch verjüngend ausgebildet sind und daß im Bereich der sich konisch verjüngenden Enden abgebogene Lappen (5) angeschlossen sind.

4. Distanzstück nach Anspruch 1, 2 oder 3, dadurch gekennzeichnet, daß in radialer Richtung hintereinander liegende Lappen (5) zumindest teilweise versetzt angeordnet sind.

5. Distanzstück nach einem der Ansprüche 1 bis 4, dadurch gekennzeichnet, daß die Ränder (7) der Durchbrechungen (2) für die Aufnahme von Verbindungsbolzen zur Ausbildung einer Hülse verformt sind.

6. Verfahren zur Herstellung eines Distanzstückes (1) nach einem der Ansprüche 1 bis 5, wobei an einem Blechzuschnitt entsprechend der gewünschten Höhe der Lappen (5) Stanzungen vorgenommen werden und Lappen (5) aus der Ebene des Blechzuschnittes, vorzugsweise um einen Winkel von 90° abgebogen werden, und wobei Durchbrechungen (2) für Verbindungsbolzen ausgestanzt werden, dadurch gekennzeichnet, daß aus den in Umfangsrichtung verlaufenden Kanten (3) des Blechzuschnittes radiale viereckige Ausnehmungen (4) ausgestanzt werden, deren Tiefe in radialer Richtung entsprechend der gewünschten Höhe der Lappen (5) gewählt ist, und daß die neben den Ausnehmungen verbleibenden Lappen (5) abgebogen werden, worauf gegebenenfalls nach dem Ausstanzen die Ränder der Durchbrechungen (7) für die Verbindungsbolzen kalt verformt, insbesondere tiefgezogen werden.

FIG. 1

FIG. 2

FIG. 3

FIG. 4